# EUROPÄISCHE PATENTANMELDUNG

(11) **EP 2 157 198 A1**
(43) Veröffentlichungstag der Anmeldung: **24.02.2010**
(21) Anmeldenummer: 09010322.7
(22) Anmeldetag: 11.08.2009
(51) Int. Cl.: C22B 11/06, C22B 11/02

(54) **Verfahren zur Gewinnung von metallischem Ruthenium oder Rutheniumverbindungen aus Ruthenium-haltigen Feststoffen**

(30) Priorität: 22.08.2008 DE 102008039278
(71) Anmelder: Bayer MaterialScience AG, 51368 Leverkusen (DE)
(72) Erfinder: Schmidt, Timm, Dr., 41472 Neuss (DE); Loddenkemper, Tim, 41542 Dormagen (DE); Gerhartz, Frank, 51381 Leverkusen (DE); Müller, Walther, 50259 Pulheim (DE)

(57) **Zusammenfassung**

Die vorliegende Erfindung betrifft ein Verfahren zur Mobilisierung von metallischem Ruthenium oder Rutheniumverbindungen aus Feststoffen unter Bildung von flüchtigen Rutheniumverbindungen mit einem Halogenwasserstoff und Kohlenmonoxid, bevorzugt Chlorwasserstoff und Kohlenmonoxid enthaltenden Gasstrom und zur Gewinnung der zuvor mobilisierten Rutheniumverbindungen bevorzugt durch Abscheidung unter Abkühlung z. B. in kälteren Zonen, insbesondere an kälteren Flächen, Absorption in geeigneten Lösungen oder Adsorption an geeigneten Trägermaterialien.

## Beschreibung

Die vorliegende Erfindung betrifft ein Verfahren zur Mobilisierung von metallischem Ruthenium oder Rutheniumverbindungen aus Feststoffen unter Bildung von flüchtigen Rutheniumverbindungen mit einem Halogenwasserstoff und Kohlenmonoxid, bevorzugt Chlorwasserstoff und Kohlenmonoxid enthaltenden Gasstrom und zur Gewinnung der zuvor mobilisierten Rutheniumverbindungen bevorzugt durch Abscheidung unter Abkühlung z. B. in kälteren Zonen, insbesondere an kälteren Flächen, Absorption in geeigneten Lösungen oder Adsorption an geeigneten Trägermaterialien.

Ein typisches Anwendungsgebiet für einen metallisches Ruthenium oder Rutheniumverbindungen enthaltenden Feststoff ist dessen Einsatz als Katalysator für die Herstellung von Chlor durch thermische Gasphasenoxidation von Chlorwasserstoff mit Sauerstoff:

4 HCl + O₂ ⇒ 2 Cl₂ + 2 H₂O

Diese Reaktion ist eine Gleichgewichtsreaktion. Die Lage des Gleichgewichts verschiebt sich mit zunehmender Temperatur zu Ungunsten des gewünschten Endproduktes. Es ist daher vorteilhaft, Katalysatoren mit möglichst hoher Aktivität einzusetzen, die die Reaktion bei niedriger Temperatur ablaufen lassen.

Erste Katalysatoren für die Chlorwasserstoffoxidation enthielten als aktive Komponente Kupferchlorid bzw. -oxid und wurden schon 1868 von Deacon beschrieben. Diese wiesen jedoch bei niedriger Temperatur (< 400°C) nur geringe Aktivitäten auf. Durch eine Erhöhung der Reaktionstemperatur konnte zwar deren Aktivität gesteigert werden, nachteilig war jedoch, dass die Flüchtigkeit der Aktivkomponenten zu einer schnellen Deaktivierung führte.

Da bis in die 60-er Jahre des 20-ten Jahrhunderts trotz immenser Forschungsaktivitäten auf diesem Gebiet keine wesentlichen Fortschritte erzielt werden konnten, wurde das nach dem Entdecker benannte Deacon-Verfahren durch die Chloralkalielektrolyse in den Hintergrund gedrängt. Bis in die 90ger Jahre erfolgte nahezu die gesamte Produktion von Chlor durch Elektrolyse wässriger Kochsalzlösungen [Ullmann Encyclopedia of industrial chemistry, seventh release, 2006]. Da der weltweite Chlorbedarf jedoch aktuell stärker wächst als die Nachfrage nach Natronlauge, ist die Attraktivität des Deacon-Verfahrens ungebrochen, da hierdurch Chlorwasserstoff für die Herstellung von Chlor wiederverwertet werden kann, welcher in großen Mengen beispielsweise bei der Phosgenierung von Aminen als Koppelprodukt anfällt.

Ein wesentlicher Fortschritt auf dem Gebiet der Chlorwasserstoffoxidation wurde durch die Entdeckung von Rutheniumverbindungen als katalytisch aktive Komponenten erzielt. Insbesondere bei der Bereitstellung eines geeigneten Katalysatorträgers wurden seitdem große Fortschritte erzielt. Als Träger besonders geeignet ist Titandioxid, dessen Anwendung beispielsweise in der Anmeldung EP 743 277 A1 beschrieben wird und Zinndioxid, dessen Anwendung beispielsweise aus der Anmeldung DE 10 2006 024 543 A1 bekannt ist.

Weitere typische Anwendungsgebiete für metallisches Ruthenium oder Rutheniumverbindungen enthaltende Feststoffe in der Katalyse sind die (selektive) Oxidation von Kohlenstoffmonoxid und die Abluftreinigung. US 7 247 592 B2 beschreibt einen metallisches Ruthenium bzw. Rutheniumverbindungen enthaltenden Katalysator für die selektive Oxidation von Kohlenstoffmonoxid. Aus US 7 318 915 B2 ist die Anwendung von metallischem Ruthenium bzw. Rutheniumverbindungen enthaltenden Katalysatoren für den kombinierten Einsatz im Bereich der Abluftbehandlung bekannt. Dabei oxidiert der beschriebene Katalysator Kohlenstoffmonoxid und flüchtige Kohlenwasserstoffe, während nitrose Gase gleichsam reduziert werden.

Weitere typische Anwendungsgebiete für metallisches Ruthenium oder Rutheniumverbindungen enthaltende Feststoffe sind Elektroden für die Herstellung von Chlor durch Elektrolyse von Natriumchlorid- und/oder Chlorwasserstoff-haltigen Lösungen. Bei der elektrolytischen Herstellung von Chlor werden gemäß Ullmann's Encyclopedia of Industrial Chemistry, 2006 Wiley-VCH-Verlag, Weinheim, S. 57-62 sogenannte dimensionsstabile Anoden (DSA) eingesetzt. Solche Anoden bestehen aus Titan, die mit einem Ruthenium-haltigen Coating beschichtet sind. Weitere typische Bestandteile von derartigen Coatings sind Oxide von Iridium, Titan, Zirkon und Zinn.

Eine weitere Anwendung von Ruthenium oder Rutheniumverbindungen enthaltenden Feststoffe ist die elektrolytische Wasserstofferzeugung. Bei der elektrolytischen Herstellung von Wasserstoff werden gemäß Ullmann's Encyclopedia of Industrial Chemistry, 2006 Wiley-VCH-Verlag, Weinheim, S. 62-63 neben anderen Metallen wie Platin, Rhodium, Raney-Nickel auch Ruthenium zur Herabsetzung der Wasserstoffüberspannung eingesetzt. Solche Kathoden bestehen aus Nickel oder Edelstahl, die mit einem Ruthenium-haltigem Coating beschichtet sind.

Daneben sind noch eine Vielzahl weiterer Anwendungen für metallisches Ruthenium oder Rutheniumverbindungen enthaltende Feststoffe bekannt.

Es wurden schon verschiedene Verfahren zur Gewinnung von Ruthenium aus Feststoffen beschrieben.

JP 3733909 B2 offenbart ein Aufschlussverfahren zur Gewinnung von Ruthenium aus Ruthenium enthaltenden Feststoffen, wobei eine alkalische Aufschlämmung durch Zugabe von Natriumhypochlorit oxidiert und dadurch Ruthenium selektiv ausgelaugt wird. Im Anschluss wird die Mutterlauge mit einem Alkohol reduziert, so dass kristallines Rutheniumhydroxid ausfällt, welches anschließend weiteren Reinigungsschritten unterzogen wird.

WO 2008/062785 A1 offenbart ein dreistufiges Verfahren zur Wiedergewinnung von Ruthenium von einem Feststoff auf dem eine Rutheniumverbindung geträgert ist durch (i) Reduzieren der Rutheniumverbindungen durch Kontaktieren mit einem reduzierenden Gas, (ii) Abkühlen des Feststoffes unter 250 °C in einer nicht oxidierenden Atmosphäre und (iii) das Mischen des Feststoffes mit einer oxidierenden Lösung, wobei dabei Rutheniumverbindungen in Lösung gehen.

DE 10 2005 061954 A1 offenbart ein dreistufiges Verfahren zur Wiedergewinnung von Ruthenium aus einem gebrauchten Ruthenium enthaltende Katalysator, der Ruthenium als Rutheniumoxid auf einem in Mineralsäure schwer löslichen Trägermaterial enthält durch (i) Reduzierung in einem Wasserstoffstrom, (ii) Behandlung des reduzierten Katalysators mit Salzsäure in Gegenwart eines sauerstoffhaltigen Gases, wobei Ruthenium(III)chlorid gebildet wird und in Lösung geht. Und (iii) gegebenenfalls weiter aufgearbeitet werden kann.

JP 03-013531 A offenbart ein Verfahren zur Wiedergewinnung von Ruthenium aus Ruthenium oder Rutheniumoxid enthaltenden Rückständen. Dabei werden diese in der Hitze mit gasförmigem Chlor zu Rutheniumchlorid umgesetzt. Das flüchtige Rutheniumchlorid wird anschließend durch eine Bariumchlorid-Lösung geleitet und als Wasser lösliches BaRuCI₅ aufgefangen.

JP 58-194745 A offenbart ein Verfahren der Wiedergewinnung von Ruthenium, bei dem auf einem korrosionsfesten Träger vorliegende Rutheniumoxide zunächst zu metallischem Ruthenium reduziert und anschließend in lösliche Alkaliruthenate überführt werden.

EP 767243 B1 beschreibt ein Verfahren zur Wiedergewinnung von Ruthenium aus gebrauchten Katalysatoren durch die Mobilisierung von Rutheniumverbindungen mit gasförmigem Chlorwasserstoff. Durch eine fraktionierte Destillation werden die mobilisierten Metallchloride voneinander getrennt.

Aus Goodwin, J. G. Jr. et. al., Appl. Cat., 1986, 24, 199 ist bekannt, dass durch die Behandlung eines Rutheniumverbindungen enthaltenden Feststoffes mit Kohlenmonoxid Rutheniumcarbonyle ausgetrieben werden können.

In der industriellen Anwendung wird bei der Aufarbeitung von Elektroden oft auf die Wiedergewinnung von Ruthenium verzichtet. Um zumindest den unbeschichteten metallischen Träger wiederzugewinnen, wird die Mischoxid enthaltende dünne Schicht an der Oberfläche der Elektroden mittels Sandstrahlverfahren entfernt. Der sehr geringe Rutheniumanteil im Sand macht die Ruthenium-Wiedergewinnung in diesem Fall unwirtschaftlich.

US 5141563 offenbart die Wiedergewinnung von Ruthenium aus gebrauchten Titanelektroden in einem mehrstufigen Verfahren, bei dem in einem ersten Schritt das Ruthenium-haltige Elektroden-Coating in einem Salzbad bestehend aus Kaliumhydroxid und Kaliumnitrat bei einer Temperatur von 300 bis 450 °C von dem Titanträger entfernt werden. Das vom Titanträger entfernte Elektroden-Coating wird beispielsweise durch Filtration aus dem Salzbad abgetrennt. Das abgetrennte Elektroden-Coating wird anschließend in einem weiteren Schritt zur Rückgewinnung des Rutheniums aufgearbeitet.

Die noch unveröffentlichte deutsche Patentanmeldung mit dem Aktenzeichen DE 10 2007 020 142.9 beschreibt ein vierstufiges Verfahren zur Rückgewinnung von Ruthenium aus einem Ruthenium enthaltenden, geträgerten Katalysatormaterial durch (i) chemischen Aufschluss des Katalysatormaterials, (ii) Herstellen einer rohen Rutheniumsalzlösung, (iii) Reinigung der rohen Rutheniumsalzlösung und (iv) weiterer Behandlungsschritte zur Gewinnung von Rutheniumchlorid.

Es ist offensichtlich noch kein einfach zu handhabendes Gasphasenverfahren entwickelt worden mit dem metallisches Ruthenium oder Rutheniumverbindungen ohne aufwändige Vorbehandlung, ohne die Verarbeitung von Feststoffaufschlämmungen, insbesondere ohne die mechanische Vorbehandlung des Feststoffes, bei moderaten Temperaturen aus Feststoffen, insbesondere auch aus in Mineralsäuren unlöslichen Feststoffen, mobilisiert werden können und die zuvor mobilisierten Rutheniumverbindungen einfach wiedergewonnen werden können. Die Aufgabe dieser Erfindung ist es somit ein einfaches und effizientes Verfahren zur Mobilisierung von metallischem Ruthenium oder Rutheniumverbindungen aus Feststoffen und zur Wiedergewinnung der zuvor mobilisierten Rutheniumverbindungen bereitzustellen.

Überraschenderweise wurde nun gefunden, dass metallisches Ruthenium oder Rutheniumverbindungen aus Feststoffen durch eine gezielte Behandlung mit einem Halogenwasserstoff und Kohlenmonoxid, bevorzugt Chlorwasserstoff und Kohlenmonoxid enthaltenden Gasstrom, mobilisiert werden können und die zuvor mobilisierten Rutheniumverbindungen unter Abkühlung bevorzugt durch Abscheidung in kälteren Zonen, insbesondere an kälteren Flächen, Absorption in geeigneten Lösungen oder Adsorption an geeigneten Trägermaterialien wiedergewonnen werden können.

In den folgenden Abschnitten wird die Wortwendung "Mobilisierung von metallischem Ruthenium oder Rutheniumverbindungen aus Feststoffen" auch verkürzt als "Mobilisierung von Rutheniumverbindungen", "Mobilisierung" oder mit ähnlichen Wortwendungen beschrieben. Hierunter wird die Bildung flüchtiger bei Reaktionsbedingungen gasförmiger Rutheniumverbindungen im Sinne der Erfindung verstanden. Sofern nicht explizit ausgeschlossen, schließt der Begriff "Rutheniumverbindung" auch immer "metallisches Ruthenium" mit ein.

Gegenstand der Erfindung ist ein Verfahren zur Gewinnung von metallischem Ruthenium oder Rutheniumverbindungen aus Ruthenium oder Rutheniumverbindungen enthaltenden Feststoffen, insbesondere Feststoffkatalysator oder Elektrodenmaterial durch Behandlung des Feststoffs mit einem Gasstrom, der mindestens Halogenwasserstoff und Kohlenmonoxid enthält, bevorzugt Chlorwasserstoff und Kohlenmonoxid, in einer Reaktionszone bei erhöhter Temperatur, bevorzugt mindestens bei 250 °C, unter Bildung von flüchtigen Rutheniumverbindungen, die mit dem Gasstrom ausgetragen werden und anschließender Abkühlung des beladenen Gasstroms, bevorzugt durch Abscheidung in einer Abscheidungszone, die kälter ist als die Reaktionszone, insbesondere an kälteren Abscheidungsflächen, und/oder Absorption in Lösungen oder/oder Adsorption an Trägermaterialien.

Das erfindungsgemäße Verfahren kann somit zur Mobilisierung und Wiedergewinnung von Rutheniumverbindungen aus Feststoffen eingesetzt werden.

Das neue Verfahren wird in einer bevorzugten Variante in drei Phasen durchgeführt, wobei die dritte Phase (Mobilisierphase) das erfindungsgemäße Verfahren ist, während in der ersten Phase (Oxidierphase) und in der zweiten Phase (Halogenierphase) Vorbehandlungen durchgeführt werden, die gegebenenfalls entfallen können.

In der Oxidierphase des bevorzugten Verfahrens wird der Rutheniumverbindungen enthaltende Feststoff mit einem Sauerstoff enthaltenden Gasstrom durchströmt, wobei der Sauerstoffgehalt im Gasstrom insbesondere mindestens 0,1 Vol.-%, bevorzugt 10 bis 50 Vol.-% beträgt, besonders bevorzugt wird Luft eingesetzt. Die Oxidierphase wird bei einer Temperatur von bis zu 700°C, bevorzugt bei 200°C bis 500°C, besonders bevorzugt bei 300°C bis 400°C durchgeführt. Die Dauer der Oxidierphase beträgt bevorzugt bis zu 5 Stunden. Die Oxidierphase dient insbesondere dazu metallisches Ruthenium und organische Rutheniumverbindungen (partiell) in Rutheniumoxide oder Rutheniummischoxide zu überführen. Dieses Vorgehen ist dann z. B. besonders vorteilhaft, wenn die Rutheniumverbindung als Rutheniummetall vorliegt.

In der Halogenierphase des bevorzugten Verfahrens wird der Rutheniumverbindungen enthaltende Feststoff mit einem Halogenwasserstoff, bevorzugt Chlorwasserstoff, enthaltenden Gasstrom durchströmt, wobei der Halogenwasserstoffgehalt im Gasstrom mindestens 0,1 Vol.-%, bevorzugt mindestens 1 Vol.-%, ganz besonders bevorzugt mindestens 10 Vol.-% beträgt. In einer bevorzugten Ausführung enthält der Gasstrom weniger als 10 Vol.-% Sauerstoff, besonders bevorzugt weniger als 1 Vol.-%, ganz besonders bevorzugt ist der Gasstrom sauerstofffrei. Die Halogenierphase wird insbesondere bei einer Temperatur von bis zu 700 °C, bevorzugt bei bis zu 500 °C, besonders bevorzugt bei 100 °C bis 400 °C durchgeführt. Die Dauer der Halogenierphase beträgt bevorzugt bis zu 1 Stunde, besonders bevorzugt mindestens > 5 min. Die Halogenierphase dient insbesondere dazu Rutheniumverbindungen, insbesondere Rutheniumoxide und Rutheniummischoxide, partiell in Rutheniumhalogenide oder Rutheniumoxidhalogenide, bevorzugt Rutheniumchloride oder Rutheniumoxidchloride zu überführen.

In der Mobilisierphase wird der Rutheniumverbindungen enthaltende Feststoff mit einem Halogenwasserstoff und Kohlenmonoxid, bevorzugt Chlorwasserstoff und Kohlenmonoxid, enthaltenden Gasstrom durchströmt. Dabei beträgt der Halogenwasserstoffgehalt des Halogenwasserstoff/CO-Gemisches des in die Reaktionszone eingehenden Gasstroms insbesondere 0,1 bis 99,9 Vol.-%, bevorzugt 1 bis 99 Vol.-%, besonders bevorzugt 10 bis 90 Vol.-% und ganz besonders bevorzugt 30 bis 70 Vol.-%.

Der Kohlenmonoxidgehalt des Halogenwasserstoff / CO-Gemisches des in die Reaktionszone eingehenden Gasstroms beträgt insbesondere 0,1 bis 99,9 Vol.-%, bevorzugt 1 bis 99 Vol.-%, besonders bevorzugt 10 bis 90 Vol.-% und ganz besonders bevorzugt 30 bis 70 Vol.-%.

Die Summe beider Komponenten Halogenwasserstoff und CO beträgt insbesondere mindestens 0,2 Vol.-%, bevorzugt mindestens 2 Vol.-%, besonders bevorzugt mindestens 20 Vol.-% und ganz besonders bevorzugt mindestens 60 Vol.-% des in die Reaktionszone eingehenden Gasstroms.

Das Volumenverhältnis von Halogenwasserstoff zu Kohlenmonoxid im in die Reaktionszone eingehenden Gasstrom beträgt bevorzugt 0,1 bis 10, besonders bevorzugt 0,3 bis 3 und ganz besonders bevorzugt 0,5 bis 2.

In einer bevorzugten Ausführung enthält der in die Reaktionszone eingehende Gasstrom weniger als 10 Vol.-% Sauerstoff, besonders bevorzugt weniger als 1 Vol.-% und ganz besonders bevorzugt ist der Gasstrom sauerstofffrei.

In einer weiteren bevorzugten Ausführung des Verfahrens beträgt die Leerrohrgeschwindigkeit des in die Reaktionszone eingehenden Gasstroms weniger als 10 cm/s, besonders bevorzugt weniger als 2 cm/s.

Die Mobilisierphase des neuen Verfahrens wird bei erhöhter Temperatur, insbesondere bei einer Temperatur von mindestens 250 °C, bevorzugt bei 250 °C bis 400 °C, besonders bevorzugt bei 250 °C bis 380°C, ganz besonders bevorzugt bei 300 °C bis 350 °C durchgeführt. Wenn die Temperatur zu niedrig, d. h. wesentlich unter 250 °C gewählt wird, ist die Mobilisierrate langsam und die benötigte Dauer wird unnötig hoch. Wenn die Temperatur zu hoch, d. h. wesentlich über 400 °C, gewählt wird, kann der Anteil anderer Feststoffkomponenten, z. B. von Titanträgermaterial, und deren Verbindungen im aus der Reaktionszone ausgehenden Gasstrom stark ansteigen. Dies ist gewöhnlich nicht erwünscht. Wenn ein partieller Austrag anderer Komponenten hingenommen werden kann oder sogar erwünscht ist, kann es vorteilhaft sein die Temperatur auch zeitweise über 400 °C anzuheben. Dies kann zum Beispiel zum Aufbrechen von Mischoxiden, z. B. Titan-Ruthenium-Mischoxiden, in Elektrodenbeschichtungen notwendig sein.

Die Dauer der Mobilisierphase beträgt bevorzugt bis zu 10 Stunden. Die optimale Dauer hängt insbesondere vom Rutheniumgehalt des Feststoffes, von der Zugänglichkeit des immobilisierten Rutheniumanteils im Feststoff, von der Temperatur, vom Halogenwasserstoffgehalt und Kohlenmonoxidgehalt des Gasstromes und vom erwünschten Wiedergewinnungsgrad ab. Die Mobilisierphase dient insbesondere dazu Rutheniumverbindungen aus dem Feststoff zu mobilisieren.

Weitere Bestandteile des Gasstroms können unabhängig voneinander in allen drei Phasen (der Oxidierphase, Halogenierphase, Mobilisierphase) insbesondere Inertgase, z.B. Stickstoff oder Argon sein. Erfahrungsgemäß enthalten die verwendbaren Gase technisch bedingt oft Verunreinigungen (in der Größenordnung <1000 ppm), z.B. Chlor und Wasser, deren Anwesenheit in dieser Konzentration nicht nachteilig für die erfindungsgemäße Anwendung ist.

Der elementare Halogenwasserstoff in der Halogenierphase oder in der Mobilisierphase kann auch durch Substanzen bzw. Substanzmischungen ersetzt werden, die Halogenwasserstoff, d.h. insbesondere Chlor-, Fluor-, Brom-, oder Iodwasserstoff unter den beschriebenen Prozessbedingungen freisetzen oder Substanzen bzw. Substanzmischungen, deren Wasserstoff- und Halogenfunktionen eine vergleichbare Wirkung wie elementarer Halogenwasserstoff unter den beschriebenen Prozessbedingungen erzielen. Beispielhaft wird hier Phosgen erwähnt.

Elementares Kohlenmonoxid in der Mobilisierphase kann auch durch Substanzen bzw. Substanzmischungen ersetzt werden, die Kohlenmonoxid unter den beschriebenen Prozessbedingungen freisetzen oder Substanzen bzw. Substanzmischungen, deren Carbonylfunktion eine vergleichbare Wirkung wie elementares Kohlenmonoxid unter den beschriebenen Prozessbedingungen erzielen. Beispielhaft wird hier Phosgen erwähnt.

In einer bevorzugten Ausführung werden die einzelnen Phasen (Oxidierphase, Halogenierphase, Mobilisierphase) mehrfach hintereinander durchlaufen. Dies kann dazu dienen, Ablagerungen von Kohlenstoff oder Kohlenstoff enthaltenden Verbindungen von der Oberfläche des Festkörpers zu entfernen, die die Rutheniumverbindungen bedecken.

Für die erfindungsgemäße Anwendung bevorzugt geeignet sind poröse Feststoffe, an deren (inneren) Oberfläche immobilisierte Rutheniumverbindungen angereichert sind. Beispielhaft seien hier Rutheniumverbindungen enthaltende Katalysatoren erwähnt. Für die erfindungsgemäße Anwendung besonders bevorzugt sind poröse Feststoffe, an deren (inneren) Oberfläche Rutheniumhalogenide, insbesondere Rutheniumchloride, Rutheniumoxidhalogenide, insbesondere Rutheniumoxidchloride, oder Rutheniumoxide, einzeln oder in Mischung, angereichert sind. Ebenfalls bevorzugt für die erfindungsgemäße Anwendung sind wenig poröse bis unporöse Feststoffe, an deren (äußeren) Oberfläche immobilisierte Rutheniumverbindungen angereichert sind. Beispielhaft seien hier Ruthenium enthaltende Elektroden z. B. für die Elektrolyse von Natriumchlorid oder Wasserstoffchlorid erwähnt.

Eine besonders bevorzugte Anwendung ist die Mobilisierung von Rutheniumverbindungen aus Katalysatoren, deren Träger hauptsächlich eine Rutilstruktur aufweist. Eine weitere besonders bevorzugte Anwendung ist die Mobilisierung von Rutheniumverbindungen aus Katalysatoren, deren Träger Titandioxid, Aluminiumoxid, Zirkonoxid oder Zinndioxid oder deren Mischungen enthält. Eine weitere besonders bevorzugte Anwendung ist die Mobilisierung von Rutheniumverbindungen aus Trägerkatalysatoren oder Vollkatalysatoren, dadurch gekennzeichnet, dass der Träger aus SiO₂ SiC, Si₃N₄, Zeolithen, hydrothermal hergestellten Phosphaten, Tonen, Pillared Clays, Silikaten oder deren Gemischen besteht.

Poröse Feststoffe werden in einer bevorzugten Ausführung in Siebfraktionen zwischen 0,1 mm und 50 mm, besonders bevorzugt zwischen 0,5 mm und 20 mm eingesetzt. Besonders bevorzugt werden diese porösen Feststoffe mechanisch unbehandelt dem erfindungsgemäßen Verfahren unterzogen. Beispielhaft seien hier die Vielzahl möglicher Katalysatorformkörper genannt, die demzufolge im ursprünglichen Zustand eingesetzt werden können Ein großer Vorteil dabei ist, dass die Bildung von Feststoffstäuben vermieden sowie der Druckverlust gering gehalten werden.

Wenig poröse oder unporöse Feststoffe werden in einer bevorzugten Ausführung mechanisch unbehandelt dem erfindungsgemäßen Verfahren unterzogen. Beispielhaft seien hier Ruthenium enthaltende Elektroden für die Elektrolyse von Natriumchlorid oder Chlorwasserstoff erwähnt, die im Anschluss an die Durchführung des erfindungsgemäßen Verfahrens neu beschichtet und wiederverwendet werden können.

In einer besonders bevorzugten Ausführung verbleibt der Ruthenium-haltige Katalysator-Feststoff während der Durchführung des neuen Verfahrens oder zumindest für einen Teil der Durchführung des neuen Verfahrens in demselben Reaktor, in dem auch die katalytische Zielreaktion durchgeführt wird, für die der Feststoff eingesetzt wird. Beispielhaft sei hier als Zielreaktion ein auf Ruthenium-Katalysatoren beruhendes Verfahren zur thermischen Gasphasenoxidation von Chlorwasserstoff mit Sauerstoff erwähnt.

Bevorzugt wird das erfindungsgemäße Verfahren zur Erneuerung des Katalysators für das als Deacon-Prozess bekannte katalytische Gasphasenoxidationsverfahren verwendet. Beim Deacon-Prozess wird Chlorwasserstoff mit Sauerstoff in einer exothermen Gleichgewichtsreaktion zu Chlor oxidiert, wobei Wasserdampf anfällt. Die Reaktionstemperatur beträgt üblicherweise 150 bis 500 °C, der übliche Reaktionsdruck beträgt 1 bis 25 bar. Da es sich um eine Gleichgewichtsreaktion handelt, ist es zweckmäßig, bei möglichst niedrigen Temperaturen zu arbeiten, bei denen der Katalysator noch eine ausreichende Aktivität aufweist. Ferner ist es zweckmäßig, Sauerstoff in überstöchiometrischen Mengen zum Chlorwasserstoff einzusetzen. Üblich ist beispielsweise ein zwei- bis vierfacher Sauerstoff-Überschuss. Da keine Selektivitätsverluste zu befürchten sind, kann es wirtschaftlich vorteilhaft sein, bei relativ hohem Druck und dementsprechend bei gegenüber Normaldruck längerer Verweilzeit zu arbeiten.

Die katalytische Chlorwasserstoff-Oxidation kann adiabatisch oder bevorzugt isotherm oder annähernd isotherm, diskontinuierlich, bevorzugt aber kontinuierlich als Fließ- oder Festbettverfahren, bevorzugt als Festbettverfahren, besonders bevorzugt in Rohrbündelreaktoren an Heterogenkatalysatoren bei einer Reaktortemperatur von 180 bis 500 °C, bevorzugt 200 bis 400 °C, besonders bevorzugt 220 bis 350 °C und einem Druck von 1 bis 25 bar (1000 bis 25000 hPa), bevorzugt 1,2 bis 20 bar, besonders bevorzugt 1,5 bis 17 bar und insbesondere 2,0 bis 15 bar durchgeführt werden.

Übliche Reaktionsapparate, in denen die katalytische Chlorwasserstoff-Oxidation durchgeführt wird, sind Festbett- oder Wirbelbettreaktoren. Die katalytische Chlorwasserstoff- Oxidation kann bevorzugt auch mehrstufig durchgeführt werden.

Der Umsatz an Chlorwasserstoff im einfachen Durchgang kann bevorzugt auf 15 bis 90%, bevorzugt 40 bis 90%, besonders bevorzugt 50 bis 90% begrenzt werden. Nicht umgesetzter Chlorwasserstoff kann nach Abtrennung teilweise oder vollständig in die katalytische Chlorwasserstoff-Oxidation zurückgeführt werden.

Bei der adiabaten oder annähernd adiabaten Fahrweise können auch mehrere, also 2 bis 10, bevorzugt 2 bis 6, besonders bevorzugt 2 bis 5, insbesondere 2 bis 3, in Reihe geschaltete Reaktoren mit zusätzlicher Zwischenkühlung eingesetzt werden. Der Chlorwasserstoff kann entweder vollständig zusammen mit dem Sauerstoff vor dem ersten Reaktor oder über die verschiedenen Reaktoren verteilt zugegeben werden. Diese Reihenschaltung einzelner Reaktoren kann auch in einem Apparat zusammengeführt werden.

Eine weitere bevorzugte Ausführungsform einer für das Deacon-Verfahren geeigneten Vorrichtung besteht darin, dass man eine strukturierte Katalysatorschüttung einsetzt, bei der die Katalysatoraktivität in Strömungsrichtung ansteigt. Eine solche Strukturierung der Katalysatorschüttung kann durch unterschiedliche Tränkung der Katalysatorträger mit Aktivmasse oder durch unterschiedliche Verdünnung des Katalysators mit einem Inertmaterial erfolgen. Als Inertmaterial können beispielsweise Ringe, Zylinder oder Kugeln aus Titandioxid, Zirkondioxid oder deren Gemischen, Aluminiumoxid, Steatit, Keramik, Glas, Graphit oder Edelstahl eingesetzt werden. Beim bevorzugten Einsatz von Katalysatorformkörpern sollte das Inertmaterial bevorzugt ähnliche äußere Abmessungen haben.

Geeignete bevorzugte Katalysatoren für das Deacon-Verfahren enthalten Rutheniumoxide, Rutheniumchloride oder andere Rutheniumverbindungen. Als Trägermaterialen eignen sich beispielsweise Siliziumdioxid, Graphit, Titandioxid mit Rutil- oder Anatas-Struktur, Zirkondioxid, Aluminiumoxid oder deren Gemische, bevorzugt Titandioxid, Zirkondioxid, Aluminiumoxid oder deren Gemische, besonders bevorzugt γ- oder δ-Aluminiumoxid oder deren Gemische. Geeignete Katalysatoren können beispielsweise durch Aufbringen von Ruthenium(III)chlorid auf den Träger und anschließendes Trocknen oder Trocknen und Calcinieren erhalten werden. Geeignete Katalysatoren können ergänzend zu einer Rutheniumverbindung auch Verbindungen anderer Edelmetalle, beispielsweise Gold, Palladium, Platin, Osmium, Iridium, Silber, Kupfer oder Rhenium enthalten. Geeignete Katalysatoren können ferner Chrom(III)oxid enthalten.

Zur Dotierung der Katalysatoren eignen sich als Promotoren Alkalimetalle wie Lithium, Natrium, Kalium, Rubidium und Cäsium, bevorzugt Lithium, Natrium und Kalium, besonders bevorzugt Kalium, Erdalkalimetalle wie Magnesium, Calcium, Strontium und Barium, bevorzugt Magnesium und Calcium, besonders bevorzugt Magnesium, Seltenerdmetalle wie Scandium, Yttrium, Lanthan, Cer, Praseodym und Neodym, bevorzugt Scandium, Yttrium, Lanthan und Cer, besonders bevorzugt Lanthan und Cer, oder deren Gemische.

Die Formgebung des Katalysators kann nach oder bevorzugt vor der Tränkung des Trägermaterials erfolgen. Als Katalysatorformkörper eignen sich Formkörper mit beliebigen Formen, bevorzugt sind Tabletten, Ringe, Zylinder, Sterne, Wagenräder oder Kugeln, besonders bevorzugt sind Ringe, Zylinder oder Sternstränge als Form. Die Formkörper können anschließend bei einer Temperatur von 100 bis 400 °C, bevorzugt 100 bis 300 °C beispielsweise unter einer Stickstoff-, Argon- oder Luftatmosphäre getrocknet und gegebenenfalls calciniert werden. Bevorzugt werden die Formkörper zunächst bei 100 bis 150 °C getrocknet und anschließend bei 200 bis 400 °C kalziniert.

Eine bevorzugte Ausführung zur Wiedergewinnung der mobilisierten Rutheniumverbindungen ist die Abscheidung der Rutheniumverbindungen unter Abkühlung insbesondere in kälteren Zonen und/oder an kälteren Flächen. Beispielhaft seien hier Kühlfinger erwähnt. Eine weitere bevorzugte Ausführung zur Wiedergewinnung der mobilisierten Rutheniumverbindungen ist die Absorption in geeigneten Absorptionslösungen. Beispielhaft sei hier eine wässerige Absorptionslösung erwähnt. Gegebenfalls können der Absorptionslösung Oxidationsmittel oder Reduktionsmittel zugesetzt werden. Eine weitere bevorzugte Ausführung zur Wiedergewinnung der mobilisierten Rutheniumverbindungen ist die Adsorption an porösen Trägermaterialien, insbesondere gekoppelt mit einer Temperaturabsenkung auf eine Temperatur < 250 °C. Eine weitere bevorzugte Ausführung zur Wiedergewinnung der mobilisierten Rutheniumverbindungen besteht aus Kopplungen der zuvor beschriebenen Abscheidungsmethoden.

Die folgenden Beispiele veranschaulichen die vorliegende Erfindung:

### Beispiele

### Beispiel 1: Präparation von Rutheniumverbindungen enthaltenden Feststoffen

Um die Erfindung veranschaulichen zu können, wurden zunächst auf SnO₂ bzw. TiO₂ geträgerte, Rutheniumverbindungen enthaltende Formkörper hergestellt.

**Beispiel 1a:** 200g SnO₂-Formkörper (kugelförmig, Durchmesser etwa 1,9 mm, 15 Gew.-% Al₂O₃-Binder, Saint-Gobain) wurden mit einer Lösung aus 9,99g Rutheniumchlorid-n-Hydrat in 33,96 ml H₂O imprägniert und anschließend 1h lang durchmischt. Der feuchte Feststoff wurde anschließend bei 60 °C im Muffelofen (Luft) für 4h getrocknet und darauf für 16h bei 250 °C kalziniert.

**Beispiel 1b:** 200g TiO₂-Pellets (zylindrisch, Durchmesser etwa 2 mm, Länge 2 bis 10 mm, Saint-Gobain) wurden mit einer Lösung aus 12g Rutheniumchlorid-n-Hydrat in 40,8ml H₂O imprägniert und anschließend 1h lang durchmischt. Die so erhaltenen feuchten Formkörper wurden über Nacht bei 60°C getrocknet und im trockenen Zustand unter Stickstoffspülung in eine Lösung aus NaOH und 25% Hydrazinhydratlösung in Wasser eingebracht und 1h stehen gelassen. Überschüssiges Wasser wurde anschließend abgedampft. Die feuchten Formkörper wurden für 2h bei 60 °C getrocknet und anschließend mit 4x 300g Wasser gewaschen. Die so erhaltenen feuchten Formkörper wurden im Muffelofen (Luft) für 20 min. bei 120 °C getrocknet und darauf für 3h bei 350 °C kalziniert.

### Beispiel 2: Einfluss von Kohlenmonoxid, Chlorwasserstoff und Sauerstoff auf die Mobilisierung von Rutheniumverbindungen

4 x 1g der Formkörper aus dem Beispiel 1a wurden in Quarzreaktionsrohren (Durchmesser 10 mm) vorgelegt, auf 330 °C aufgeheizt, für bis zu 16h jeweils mit einem Gasgemisch 1 (10 L/h) zusammengesetzt aus 1 L/h Chlorwasserstoff, 4 L/h Sauerstoff, 5 L/h Stickstoff durchströmt (Konditionierphase) und danach zur Bildung von flüchtigen Rutheniumverbindungen mit unterschiedlichen Gasgemischen bei 200 °C (2a-b) bzw. 330 °C (2c-e) durchströmt (Mobilisierphase). Die Parameter für die Mobilisierphase können der Tab. 2a entnommen werden.

**Tab. 2a: Parameter für die Mobilisierphase**

| | **Beispiel:** | **2a** | **2b** | **2c** | **2d** | **2e** |
|---|---|---|---|---|---|---|
| **Phase** | **Parameter** | | | | | |
| | Chlorwasserstoff [L/h] | - | 1 | 1 | - | 1 |
| | Kohlenmonoxid [L/h] | 1,6 | 1,6 | - | 1,6 | 1,6 |
| Mobilisierphase | Sauerstoff [L/h] | - | - | - | - | - |
| | Stickstoff [L/h] | 8,4 | 7,4 | 9 | 8,4 | 7,4 |
| | Temperatur [°C] | 200 | 200 | 330 | 330 | 330 |
| | Dauer [h] | 18 | 14 | 18 | 16 | 14 |

Im Anschluss wurden als Indikator für die Verflüchtigung von Rutheniumverbindungen die Entfärbung der Formkörper und die Bildung eines charakteristischen Niederschlags in einer kälteren Zone hinter den Reaktoren bewertet (Tab. 2b).

**Tab. 2b: Entfärbung der Formkörper; charakteristischer Niederschlag in einer kälteren Zone (keine: --, geringe: -, starke: +, sehr starke: ++)**

| **Beispiel:** | **2a** | **2b** | **2c** | **2d** | **2e** |
|---|---|---|---|---|---|
| Entfärbung | - | + | -- | - | ++ |
| Niederschlag | -- | + | -- | -- | ++ |

Im Anschluss an diese Behandlung wurden die Formkörper ausgebaut, gemörsert und der Rutheniumgehalt mittels Röntgenfluoreszenzanalyse (RFA) bestimmt. Der Niederschlag in einer kälteren Zone hinter den Reaktoren wurde mit Salzsäure (20 Gew.-% Chlorwasserstoff) ausgewaschen. Die Zusammensetzung dieser Waschlösung wurde mittels Emissionsspektroskopie (OES) bestimmt (Tab. 2c).

**Tab. 2c: Zusammensetzung der Formkörper vor und nach der Mobilisierung von Rutheniumverbindungen und Zusammensetzung des Niederschlags in einer kälteren Zone**

| | **Beispiel:** | **1a*** | **2a** | **2b** | **2c** | **2d** | **2e** |
|---|---|---|---|---|---|---|---|
| **Substrat** | **Metallkomponente** | | | | | | |
| | Ruthenium [Gew.-%] | 2,4 | n.b. | n.b. | 2,4 | n.b. | 0,56 |
| Ansatz | Zinn [Gew.-%] | 66 | n.b. | n.b. | 65 | n.b. | 65 |
| | Aluminium [Gew.-%] | 6,8 | n.b. | n.b. | 7,2 | n.b. | 7,4 |

| | | | | | | | |
|---|---|---|---|---|---|---|---|
| * unbehandelte Probe, n.b.: nicht bestimmt | | | | | | | |

Offensichtlich können Rutheniumverbindungen in diesem Temperaturbereich mit Chlorwasserstoff aus den eingesetzten Formkörpern nicht mobilisiert werden (keine Entfärbung, keine Niederschlagsbildung, kein Rutheniumverlust gemäß RFA). Mit Kohlenmonoxid können Rutheniumverbindungen in diesem Temperaturbereich nur schlecht mobilisiert werden (geringe Entfärbung, keine Niederschlagsbildung). Wenn beide Gase kombiniert werden, können jedoch Rutheniumverbindungen, insbesondere bei erhöhter Temperatur, gut bis sehr gut mobilisiert werden (starke bis sehr starke Entfärbung, starke bis sehr starke Niederschlagsbildung, Rutheniumaustrag gemäß RFA).

### Beispiel 3: Einfluss der Konditionierung auf die Mobilisierung von Rutheniumverbindungen mittels Chlorwasserstoff und Kohlenmonoxid

8 x 1g der Formkörper aus dem Beispiel 1a wurden in Quarzreaktionsrohren (Durchmesser 10 mm) vorgelegt und auf 330 °C aufgeheizt. Danach durchliefen die Ansätze bis zu 3 unterschiedliche Konditionierphasen (1-3). In der anschließenden Mobilisierphase wurden für alle Ansätze die gleichen Bedingungen eingestellt. Die Parameter für die Konditionierphasen und die Mobilisierphase können der Tab. 3a entnommen werden.

**Tab. 3a: Parameter für die Konditionierphasen und die Mobilisierphase**

| | **Beispiel:** | **3a** | **3b** | **3c** | **3d** | **3e** | **3f** | **3g** | **3h** |
|---|---|---|---|---|---|---|---|---|---|
| **Phase** | **Parameter** | | | | | | | | |
| | Chlorwasserstoff [L/h] | - | 1 | 1 | - | - | 1 | 1 | - |
| Konditionier- | Sauerstoff [L/h] | - | 4 | 4 | - | - | 4 | 4 | - |
| phase 1 | Stickstoff [L/h] | - | 5 | 5 | - | - | 5 | 5 | - |
| | Dauer [h] | - | 16 | 16 | - | - | 16 | 16 | - |
| | Chlorwasserstoff [L/h] | - | - | - | - | - | - | - | - |
| Konditionier- | Sauerstoff [L/h] | - | - | 4 | 4 | - | - | 4 | 4 |
| phase 2 | Stickstoff [L/h] | - | - | 5 | 5 | - | - | 5 | 5 |
| | Dauer [h] | - | - | 2 | 2 | - | - | 2 | 2 |
| | Chlorwasserstoff [L/h] | 1 | 1 | 1 | 1 | - | - | - | - |
| Konditionier- | Kohlenmonoxid [L/h] | - | - | - | - | 2 | 2 | 2 | 2 |
| phase 3 | Stickstoff [L/h] | 7 | 7 | 7 | 7 | 7 | 7 | 7 | 7 |
| | Dauer [h] | 1 | 1 | 1 | 1 | 1 | 1 | 1 | 1 |
| | Chlorwasserstoff [L/h] | 1 | 1 | 1 | 1 | 1 | 1 | 1 | 1 |
| | Kohlenmonoxid [L/h] | 2 | 2 | 2 | 2 | 2 | 2 | 2 | 2 |
| Mobilisierphase | Stickstoff [L/h] | 7 | 7 | 7 | 7 | 7 | 7 | 7 | 7 |
| | Dauer [h] | 16 | 16 | 16 | 16 | 16 | 16 | 16 | 16 |

Im Anschluss wurden als Indikator für die Verflüchtigung von Rutheniumverbindungen die Entfärbung der Formkörper und die Bildung eines charakteristischen Niederschlags in einer kälteren Zone hinter den Reaktoren bewertet (Tab. 3b).

**Tab. 3b: Entfärbung der Formkörper; charakteristischer Niederschlag in einer kälteren Zone (keine: --, geringe: -, mäßige: o, starke: +, sehr starke: ++)**

| **Beispiel:** | **3a** | **3b** | **3c** | **3d** | **3e** | **3f** | **3g** | **3h** |
|---|---|---|---|---|---|---|---|---|
| Entfärbung | ++ | ++ | ++ | ++ | - | - | - | - |
| Niederschlag | ++ | ++ | ++ | ++ | -- | -- | -- | -- |

Im Anschluss an diese Behandlung wurden die Formkörper ausgebaut, gemörsert und der Rutheniumgehalt mittels Röntgenfluoreszenzanalyse (RFA) bestimmt. Der Niederschlag in einer kälteren Zone hinter den Reaktoren wurde mit Salzsäure (20 Gew.-% Chlorwasserstoff) ausgewaschen. Die Zusammensetzung dieser Waschlösung wurde mittels Emissionsspektroskopie (OES) bestimmt (Tab. 3c).

**Tab. 3c: Zusammensetzung der Formkörper vor und nach der Mobilisierung von Rutheniumverbindungen und Zusammensetzung des Niederschlags in einer kälteren Zone**

| | **Beispiel:** | **1a*** | **3b** | **3c** | **3f** | **3g** |
|---|---|---|---|---|---|---|
| **Substrat** | **Metallkomponente** | | | | | |
| | Ruthenium [Gew.-%] | 2,4 | 0,3 | 0,21 | 2,7 | 3,2 |
| Ansatz | Zinn [Gew.-%] | 66 | 71 | 68 | 64 | 59 |
| | Aluminium [Gew.-%] | 6,8 | 4,9 | 6,4 | 7,9 | 11 |
| | Ruthenium [mg/L] | - | 110 | 96 | n.b. | n.b. |
| Niederschlag | Zinn [mg/L] | - | 0,71 | 0 | n.b. | n.b. |
| | Aluminium [mg/L] | - | 0,1 | 0,15 | n.b. | n.b. |

| | | | | | | |
|---|---|---|---|---|---|---|
| * unbehandelte Probe, n.b. = nicht bestimmt | | | | | | |

Es ist offensichtlich für die Bildung von flüchtigen Rutheniumverbindungen nicht entscheidend, ob die Ruthenium enthaltenden Formkörper unbehandelt, nach einer Konditionierung unter Deacon-Bedingungen oder einer Konditionierung unter oxidativen Bedingungen eingesetzt werden (Konditionierphasen 1-2). Entscheidend ist offenbar ob zuerst Chlorwasserstoff oder zuerst Kohlenmonoxid über den Ansatz gegeben wird (Konditionierphase 3). Wenn zuerst Chlorwasserstoff über den Ansatz gegeben wird, dann können anschließend Rutheniumverbindungen sehr gut mobilisiert werden; wird hingegen zuerst Kohlenmonoxid über den Ansatz gegeben, ist der Erfolg der anschließenden Mobilisierphase nur gering. Womöglich reduziert Kohlenmonoxid unter nicht oxidativen Bedingungen die auf dem Katalysator befindlichen Rutheniumverbindungen zu metallischem Ruthenium, welches ohne Reoxidation nicht gut mobilisiert werden kann. Die Zugabe von Chlorwasserstoff unterdrückt diesen Prozess offenbar, womöglich durch eine (partielle) Chlorierung der an der Feststoffoberfläche immobilisierten Rutheniumverbindungen. Die erhöhten Aluminium- und Rutheniumgehalte der Ausbauproben 3f und 3g sind auf einen Zinn-Austrag zurückzuführen.

Der in einer kälteren Zone hinter dem Reaktor ausgefallene Niederschlag bei zwei der erfolgreichen Experimente besteht nahezu vollständig aus Ruthenium (> 98 Gew.-%) des Metallanteils im Niederschlag λ) in nicht näher bestimmten Verbindungen.

### Beispiel 4: Einfluss der Temperatur auf die Mobilisierung von Rutheniumverbindungen mittels Chlorwasserstoff und Kohlenmonoxid

6 x 1g der Formkörper aus dem Beispiel 1a und 2 x 1g nicht imprägnierter Formkörper (SnO₂-Basis) wurden in Quarzreaktionsrohren (Durchmesser 10 mm) vorgelegt. Alle Ansätze (4a-h) wurden zur Konditionierung bei 330 °C für 16h mit einem Gasgemisch 1 (10 L/h) zusammengesetzt aus 1 L/h Chlorwasserstoff, 4 L/h Sauerstoff und 5 L/h Stickstoff durchströmt.

Im Anschluss daran wurden alle Ansätze mit einem Gasgemisch zusammengesetzt aus 4 L/h Sauerstoff und 5 L/h Stickstoff (Oxidierphase), danach mit einem Gasgemisch zusammengesetzt aus 1 L/h Chlorwasserstoff und 7 L/h Stickstoff (Halogenierphase) und darauf mit einem Gasgemisch 5 zusammengesetzt aus 1 L/h Chlorwasserstoff, 2 L/h Kohlenmonoxid und 7 L/h Stickstoff (Mobilisierphase) durchströmt. Diese drei Phasen wurden insgesamt drei Mal durchlaufen, wobei bei einem Teil der Ansätze (4e-4h) während der Oxidierphase die Ansätze ausschließlich mit Stickstoff (7 L/h) durchströmt wurden. Die Parameter für die einzelnen Phasen können der Tab. 4a entnommen werden.

**Tab. 4a: Parameter für die einzelnen Phasen**

| | **Beispiel:** | **4a** | **4b** | **4c** | **4d** | **4e** | **4f** | **4g** | **4h** |
|---|---|---|---|---|---|---|---|---|---|
| **Phase** | **Parameter** | | | | | | | | |
| | Gasgemisch | 3a | 3b | 3a | 3a | 3a/b | 3a/b | 3a/b | 3a/b |
| Oxidierphase | Dauer [h] | 2 | 2 | 2 | 2 | 2 | 2 | 2 | 2 |
| | Temperatur [°C] | 330 | 330 | 330 | 330 | 340 | 340 | 340 | 340 |
| | Gasgemisch | 4 | 4 | 4 | 4 | 4 | 4 | 4 | 4 |
| Halogenierphase | Dauer [h] | 0,25 | 0,25 | 0,25 | 0,25 | 0,25 | 0,25 | 0,25 | 0,25 |
| | Temperatur [°C] | 250 | 250 | 300 | 300 | 340 | 380 | 340 | 380 |
| | Gasgemisch | 5 | 5 | 5 | 5 | 5 | 5 | 5 | 5 |
| Mobilisierphase | Dauer [h] | 1,75 | 1,75 | 1,75 | 1,75 | 1,75 | 1,75 | 1,75 | 1,75 |
| | Temperatur [°C] | 250 | 250 | 300 | 300 | 340 | 380 | 340 | 380 |

Im Anschluss wurden als Indikator für die Verflüchtigung von Rutheniumverbindungen die Entfärbung der Formkörper und die Bildung eines charakteristischen Niederschlags in einer kälteren Zone hinter den Reaktoren bewertet (Tab. 4b).

**Tab. 4b: Entfärbung der Formkörper; charakteristischer Niederschlag in einer kälteren Zone (keine: --, geringe: -, mäßige: o, starke: +, sehr starke: ++)**

| **Beispiel:** | **4a** | **4b** | **4c** | **4d** | **4e** | **4f** | **4g** | **4h** |
|---|---|---|---|---|---|---|---|---|
| Entfärbung | + | + | ++ | ++ | ++ | o | -- | -- |
| Niederschlag | + | + | ++ | ++ | ++ | ++ | -- | ++ |

Im Anschluss an diese Behandlung wurden die Formkörper ausgebaut, gemörsert und der Rutheniumgehalt mittels Röntgenfluoreszenzanalyse (RFA) bestimmt. Der Niederschlag in einer kälteren Zone hinter den Reaktoren wurde mit Salzsäure (20 Gew.-% Chlorwasserstoff) ausgewaschen. Die Zusammensetzung dieser Waschlösung wurde mittels Emissionsspektroskopie (OES) bestimmt (Tab. 4c).

**Tab. 4c: Zusammensetzung der Formkörper vor und nach der Mobilisierung von Rutheniumverbindungen und Zusammensetzung des Niederschlags in einer kälteren Zone**

| | **Beispiel:** | **1a*** | **4a** | **4b** | **4c** | **4d** | **4e** | **4f** | **4g** | **4h** |
|---|---|---|---|---|---|---|---|---|---|---|
| **Substrat** | **Metallkomponente** | | | | | | | | | |
| | Ruthenium [Gew.-%] | 2,4 | 1,4 | 1,8 | 0,59 | 0,79 | 0,56 | 3,1 | n.b. | 0 |
| Ansatz | Zinn [Gew.-%] | 66 | 69 | 68 | 69 | 69 | 68 | 66 | n.b. | 69 |
| | Aluminium [Gew.-%] | 6,8 | 6,1 | 6,0 | 5,9 | 5,7 | 6,1 | 6,7 | n.b. | 6,2 |
| | Ruthenium [mg/L] | - | 129 | n.b. | n.b. | 199 | n.b. | 13 | n.v. | n.b. |
| Niederschlag | Zinn [mg/L] | - | 2,14 | n.b. | n.b. | 1,1 | n.b. | 5500 | n.v. | n.b. |
| | Aluminium [mg/L] | - | 1,42 | n.b. | n.b. | 2,4 | n.b. | 0,14 | n.v. | n.b. |

| | | | | | | | | | | |
|---|---|---|---|---|---|---|---|---|---|---|
| * unbehandelte Probe, n.b. = nicht bestimmt, n.v. = nicht (ausreichend) vorhanden | | | | | | | | | | |

Bis 340 °C sinkt mit zunehmender Temperatur der Ruthenium-Restgehalt der Formkörper, demzufolge korreliert die Mobilisierrate mit der Temperatur. Der in einer kälteren Zone hinter dem Reaktor ausfallende Niederschlag besteht nahezu vollständig aus Ruthenium (> 98 Gew.-% Ruthenium des Metallanteils) in nicht näher bestimmten Verbindungen. Eine Erhöhung der Mobilisiertemperatur auf 380 °C führt offenbar dazu, dass die Mobilisierung von Rutheniumverbindungen vermindert wird und hauptsächlich Zinnverbindungen ausgetragen werden.

Eine Reoxidation zwischen den einzelnen Mobilisierphasen führt bei den gewählten Zeitintervallen nicht zu einer Verbesserung der Mobilisierrate. Eine Reoxidation könnte jedoch zweckmäßig sein, falls die während der Mobilisierphase beobachtete Verrußung des Katalysators die Mobilisierrate zu stark begrenzen würde.

### Beispiel 5: Einfluss des CO/HCl-Verhältnisses auf die Mobilisierung von Rutheniumverbindungen mittels Chlorwasserstoff und Kohlenmonoxid

4 x 1g der Formkörper aus dem Beispiel 1a wurden in 4 Quarzreaktionsrohren (Durchmesser 10 mm) vorgelegt. Alle Ansätze (5a-d) wurden zur Konditionierung bei 330 °C für 16h mit einem Gasgemisch 1 (10 L/h) zusammengesetzt aus 1 L/h Chlorwasserstoff, 4 L/h Sauerstoff und 5 L/h Stickstoff durchströmt. Danach wurden die Ansätze zuerst für 15 min mit einem Gasgemisch 2 zusammengesetzt aus 1 L/h Chlorwasserstoff und 9 L/h Stickstoff (Halogenierphase) durchströmt, anschließend zur Bildung von flüchtigen Rutheniumverbindungen für 3h mit den in Tabelle 5a aufgeführten Gasgemischen (Mobilisierphase).

**Tab. 5a: Parameter für die Mobilisierphase**

| | **Beispiel:** | **5a** | **5b** | **5c** | **5d** |
|---|---|---|---|---|---|
| **Phase** | **Parameter** | | | | |
| | Chlorwasserstoff [L/h] | 0,25 | 0,75 | 1,25 | 1,75 |
| Mobilisierphase | Kohlenmonoxid [L/h] | 1,75 | 1,25 | 0,75 | 0,25 |
| | Stickstoff [L/h] | 8 | 8 | 8 | 8 |
| | Gesamtfluss [L/h] | 10 | 10 | 10 | 10 |

Im Anschluss wurden als Indikator für die Verflüchtigung von Rutheniumverbindungen die Entfärbung der Formkörper und die Bildung eines charakteristischen Niederschlags in einer kälteren Zone hinter den Reaktoren bewertet (Tab. 5b).

**Tab. 5b: Entfärbung der Formkörper; charakteristischer Niederschlag in einer kälteren Zone (keine: --, geringe: -, mäßige: o, starke: +, sehr starke: ++)**

| **Beispiel:** | **5a** | **5b** | **5c** | **5d** |
|---|---|---|---|---|
| Entfärbung | + | ++ | ++ | o |
| Niederschlag | - | ++ | ++ | o |

Im Anschluss an diese Behandlung wurden die Formkörper ausgebaut, gemörsert und der Rutheniumgehalt mittels Röntgenfluoreszenzanalyse (RFA) bestimmt. Der Niederschlag in einer kälteren Zone hinter den Reaktoren wurde mit Salzsäure (20 Gew.-% Chlorwasserstoff) ausgewaschen. Die Zusammensetzung dieser Waschlösung wurde mittels Emissionsspektroskopie (OES) bestimmt (Tab. 5c).

**Tab. 5c: Zusammensetzung der Formkörper vor und nach der Mobilisierung von Rutheniumverbindungen und Zusammensetzung des Niederschlags in einer kälteren Zone**

| | **Beispiel:** | **1a*** | **5a** | **5b** | **5c** | **5d** |
|---|---|---|---|---|---|---|
| **Substrat** | **Metallkomponente** | | | | | |
| | Ruthenium [Gew.-%] | 2,4 | 2,3 | 1,2 | 1,3 | 2,0 |
| Formkörper | Zinn [Gew.-%] | 64 | 64 | 65 | 65 | 64 |
| | Aluminium [Gew.-%] | 6,8 | 7,8 | 7,7 | 7,8 | 7,7 |
| | Ruthenium [mg/L] | - | n.v. | 86 | 140 | n.b. |
| Niederschlag | Zinn [mg/L] | - | n.v. | 0,3 | 0,1 | n.b. |
| | Aluminium [mg/L] | - | n.v. | 3,4 | 0,9 | n.b. |

| | | | | | | |
|---|---|---|---|---|---|---|
| * unbehandelte Probe, n.b. = nicht bestimmt, n.v. = nicht (ausreichend) vorhanden | | | | | | |

Ein moderates Volumenverhältnis von Chlorwasserstoff zu Kohlenmonoxid im Prozessgas führt offenbar zu einer deutlich höheren Mobilisierrate als ein sehr hohes oder sehr niedriges Verhältnis. Der in einer kälteren Zone hinter dem Reaktor ausfallende Niederschlag besteht nahezu vollständig aus Ruthenium (> 95 Gew.-% des gesamten Metallgehalts) in nicht näher bestimmten Verbindungen.

### Beispiel 6: Einfluss des Aktivkomponentenanteils (CO + HCl) auf die Mobilisierung von Rutheniumverbindungen mittels Chlorwasserstoff und Kohlenmonoxid

8 x 1g der Formkörper aus dem Beispiel 1a wurden in 4 Quarzreaktionsrohren (Durchmesser 10 mm) vorgelegt. Alle Ansätze (6a-6h) wurden zur Konditionierung bei 330 °C für 16h mit einem Gasgemisch 1 (10 L/h) zusammengesetzt aus 1 L/h Chlorwasserstoff, 4 L/h Sauerstoff und 5 L/h Stickstoff durchströmt. Danach wurden die Ansätze zuerst für 15 min mit einem Gasgemisch 2 zusammengesetzt aus 1 L/h Chlorwasserstoff und 9 L/h Stickstoff (Halogenierphase) durchströmt, anschließend zur Bildung von flüchtigen Rutheniumverbindungen für 2h mit den in Tabelle 6a aufgeführten Gasgemischen (Mobilisierphase).

**Tab. 6a: Parameter für die Mobilisierphase**

| | **Beispiel:** | **6a** | **6b** | **6c** | **6d** | **6e** | **6f** | **6g** | **6h** |
|---|---|---|---|---|---|---|---|---|---|
| **Phase** | **Parameter** | | | | | | | | |
| | Chlorwasserstoff [L/h] | 0,13 | 0,39 | 0,66 | 0,92 | 0,35 | 1,05 | 1,76 | 2,46 |
| | Kohlenmonoxid [L/h] | 0,22 | 0,66 | 1,09 | 1,53 | 0,59 | 1,76 | 2,93 | 4,1 |
| Mobilisierphase | Stickstoff [L/h] | 9,65 | 8,95 | 8,25 | 7,55 | 9,06 | 7,19 | 5,31 | 3,44 |
| | Gesamtfluss [L/h] | 10 | 10 | 10 | 10 | 10 | 10 | 10 | 10 |
| | Dauer [h] | 3 | 3 | 3 | 3 | 2 | 2 | 2 | 2 |

Im Anschluss wurden als Indikator für die Verflüchtigung von Rutheniumverbindungen die Entfärbung der Formkörper und die Bildung eines charakteristischen Niederschlags in einer kälteren Zone hinter den Reaktoren bewertet (Tab. 6b).

**Tab. 6b: Entfärbung der Formkörper; charakteristischer Niederschlag in einer kälteren Zone (keine: --, geringe: -, mäßige: o, starke: +, sehr starke: ++)**

| **Beispiel:** | **6a** | **6b** | **6c** | **6d** | **6e** | **6f** | **6g** | **6h** |
|---|---|---|---|---|---|---|---|---|
| Entfärbung | o | o | + | ++ | o | + | ++ | ++ |
| Niederschlag | - | o | + | ++ | o | + | ++ | ++ |

Im Anschluss an diese Behandlung wurden die Formkörper ausgebaut, gemörsert und der Rutheniumgehalt mittels Röntgenfluoreszenzanalyse (RFA) bestimmt. Der Niederschlag in einer kälteren Zone hinter den Reaktoren wurde mit Salzsäure (20 Gew.-% Chlorwasserstoff) ausgewaschen. Die Zusammensetzung dieser Waschlösung wurde mittels Emissionsspektroskopie (OES) bestimmt (Tab. 6c).

**Tab. 6c: Zusammensetzung der Formkörper vor und nach der Mobilisierung von Rutheniumverbindungen und Zusammensetzung des Niederschlags in einer kälteren Zone**

| | **Beispiel:** | **1a*** | **6a** | **6b** | **6c** | **6d** | **6e** | **6f** | **6g** | **6h** |
|---|---|---|---|---|---|---|---|---|---|---|
| **Substrat** | **Metallkomponente** | | | | | | | | | |
| | Ruthenium [Gew.-%] | 2,4 | 2,3 | 2,0 | 1,6 | 1,3 | 2,1 | 1,4 | 1,2 | 0,95 |
| Formkörper | Zinn [Gew.-%] | 66 | 64 | 64 | 64 | 65 | 64 | 64 | 64 | 65 |
| | Aluminium [Gew.-%] | 6,8 | 7,8 | 7,9 | 7,9 | 7,8 | 7,7 | 7,4 | 7,8 | 7,5 |
| | Ruthenium [mg/L] | - | n.b. | 72 | 100 | n.b. | n.b. | n.b. | n.b. | 150 |
| Niederschlag | Zinn [mg/L] | - | n.b. | 0,4 | 0,1 | n.b. | n.b. | n.b. | n.b. | 0,4 |
| | Aluminium [mg/L] | - | n.b. | 0,9 | 0,9 | n.b. | n.b. | n.b. | n.b. | 0,5 |

| | | | | | | | | | | |
|---|---|---|---|---|---|---|---|---|---|---|
| * unbehandelte Probe, n.b. = nicht bestimmt | | | | | | | | | | |

Mit zunehmendem Partialdruck der Aktivkomponenten Chlorwasserstoff zu Kohlenmonoxid steigt offenbar die Mobilisierrate. Der in kälteren Zonen hinter dem Reaktor ausfallende Niederschlag besteht nahezu vollständig aus Ruthenium (> 98 Gew.-% des gesamten Metallanteils) in nicht näher bestimmten Verbindungen.

### Beispiel 7: Einfluss der Kontaktzeit auf die Mobilisierung von Rutheniumverbindungen mittels Chlorwasserstoff und Kohlenmonoxid

4 x 1g der Formkörper aus dem Beispiel 1a wurden in 4 Quarzreaktionsrohren (Durchmesser 10 mm) vorgelegt. Alle Ansätze (7a-d) wurden auf 330 °C aufgeheizt und zur Konditionierung für 16h mit einem Gasgemisch 1 (10 L/h) zusammengesetzt aus 1 L/h Chlorwasserstoff, 4 L/h Sauerstoff und 5 L/h Stickstoff durchströmt. Danach wurden die Ansätze zuerst für 15 min mit einem Gasgemisch 2 zusammengesetzt aus 10 Vol.-% Chlorwasserstoff und 90 Vol.-% Stickstoff (Halogenierphase) und anschließend zur Bildung von flüchtigen Rutheniumverbindungen für 2h mit einem HCl/CO-Gasgemisch (Mobilisierphase) durchströmt. Die Volumenströme mit denen die einzelnen Ansätze durchströmt wurden können der Tab. 7a entnommen werden.

**Tab. 7a: Parameter für die Mobilisierphase**

| | **Beispiel:** | **7a** | **7b** | **7c** | **7d** |
|---|---|---|---|---|---|
| **Phase** | **Parameter** | | | | |
| | Chlorwasserstoff [L/h] | 0,35 | 1,05 | 1,76 | 2,46 |
| Mobilisier- | Kohlenmonoxid [L/h] | 0,59 | 1,76 | 2,93 | 4,1 |
| phase | Stickstoff [L/h] | 0,94 | 2,81 | 4,69 | 6,56 |
| | Gesamtfluss [L/h] | 1,88 | 5,62 | 9,38 | 13,12 |

Im Anschluss wurden als Indikator für die Verflüchtigung von Rutheniumverbindungen die Entfärbung der Formkörper und die Bildung eines charakteristischen Niederschlags in einer kälteren Zone hinter den Reaktoren bewertet (Tab. 7b).

**Tab. 7b: Entfärbung der Formkörper; charakteristischer Niederschlag in einer kälteren Zone (keine: --, geringe: -, mäßige: o, starke: +, sehr starke: ++)**

| **Beispiel:** | **7a** | **7b** | **7c** | **7d** |
|---|---|---|---|---|
| Entfärbung | ++ | ++ | ++ | ++ |
| Niederschlag | ++ | ++ | ++ | ++ |

Im Anschluss an diese Behandlung wurden die Formkörper ausgebaut, gemörsert und der Rutheniumgehalt mittels Röntgenfluoreszenzanalyse (RFA) bestimmt. Der Niederschlag in den kälteren Zonen hinter den Reaktoren wurde mit Salzsäure (20 Gew.-% Chlorwasserstoff) ausgewaschen. Die Zusammensetzung dieser Waschlösung wurde mittels Emissionsspektroskopie (OES) bestimmt (Tab. 7c).

**Tab. 7c: Zusammensetzung der Formkörper vor und nach der Mobilisierung von Rutheniumverbindungen und Zusammensetzung des Niederschlags in einer kälteren Zone**

| | **Beispiel:** | **1a*** | **7a** | **7b** | **7c** | **7d** |
|---|---|---|---|---|---|---|
| **Substrat** | **Metallkomponente** | | | | | |
| | Ruthenium [Gew.-%] | 2,4 | 1,7 | 1,5 | 1,5 | 1,4 |
| Formkörper Niederschlag | Zinn [Gew.-%] | 66 | 65 | 65 | 65 | 65 |
| | Aluminium [Gew.-%] | 6,8 | 7,5 | 7,4 | 7,3 | 7,4 |
| | Ruthenium [mg/L] | - | n.b. | n.b. | n.b. | 41 |
| | Zinn [mg/L] | - | n.b. | n.b. | n.b. | 0,1 |
| | Aluminium [mg/L] | - | n.b. | n.b. | n.b. | 0,6 |

| | | | | | | |
|---|---|---|---|---|---|---|
| * unbehandelte Probe, n.b. = nicht bestimmt | | | | | | |

Der Gesamtfluss ist offenbar nur von untergeordneter Rolle für die Mobilisierrate von Rutheniumverbindungen. Offenbar ist über einen weiten Bereich der Leerrohrgeschwindigkeit der Massentransport in der Gasphase nicht limitierend. Der in einer kälteren Zone hinter dem Reaktor ausfallende Niederschlag besteht nahezu vollständig aus Ruthenium (> 98 Gew.-% Ruthenium des gesamten Metallanteils) in nicht näher bestimmten Verbindungen.

### Beispiel 8: Einfluss der Trägerkomponente auf die Mobilisierung von Rutheniumverbindungen mittels Chlorwasserstoff und Kohlenmonoxid

1g der Formkörper aus dem Beispiel 1b wurden in einem Quarzreaktionsrohren (Durchmesser 10 mm) vorgelegt. Der Ansatz (8a) wurde auf 330 °C aufgeheizt. Danach wurden dieser Absatz zuerst für 15 min mit einem Gasgemisch 1 zusammengesetzt aus 0,75 L/h Chlorwasserstoff und 9,25 L/h Stickstoff durchströmt (Halogenierphase). Darauf wurde der Ansatz zur Bildung von flüchtigen Rutheniumverbindungen für 1,5h mit einem Gasgemisch 2 zusammengesetzt aus 0,75 L/h Chlorwasserstoff, 0,75 L/h Kohlenmonoxid und 8,5 Vol.-% Stickstoff und anschließend für weitere 1,5h mit einem Gasgemisch 3 zusammengesetzt aus 0,75 L/h Chlorwasserstoff, 0,75 L/h Kohlenmonoxid und 1,5 Vol.-% Stickstoff (Mobilisierphase) durchströmt.

Im Anschluss wurden als Indikator für die Verflüchtigung von Rutheniumverbindungen die Entfärbung der Formkörper und die Bildung eines charakteristischen Niederschlags in einer kälteren Zone hinter den Reaktoren bewertet (Tab. 8a).

**Tab. 8a: Entfärbung der Formkörper; charakteristische Niederschlag in einer kälteren Zone (keine: --, geringe: -, mäßige: o, starke: +, sehr starke: ++)**

| **Beispiel:** | **8a** |
|---|---|
| Entfärbung | ++ |
| Niederschlag | ++ |

Im Anschluss an diese Behandlung wurden die Formkörper ausgebaut, gemörsert und der Rutheniumgehalt mittels Röntgenfluoreszenzanalyse (RFA) bestimmt. Der Niederschlag in einer kälteren Zonen hinter den Reaktoren wurde mit Salzsäure (20 Gew.-% Chlorwasserstoff) ausgewaschen. Die Zusammensetzung dieser Waschlösung wurde mittels Emissionsspektroskopie (OES) bestimmt (Tab. 8b).

**Tab. 8b: Zusammensetzung der Formkörper vor und nach der Mobilisierung von Rutheniumverbindungen und Zusammensetzung des Niederschlags in einer kälteren Zone**

| | **Beispiel:** | **1b*** | **8a** |
|---|---|---|---|
| **Substrat** | **Metallkomponente** | | |
| Formkörper | Ruthenium [Gew.-%] | 2,9 | 2,2 |
| | Titan [Gew.-%] | 57 | 54 |
| Niederschlag | Ruthenium [mg/L] | - | 97 |
| | Titan [mg/L] | - | <1 |

| | | | |
|---|---|---|---|
| * unbehandelte Probe | | | |

Offenbar können auch aus Feststoffen, die hauptsächlich aus Titandioxid bestehen Rutheniumverbindungen ausgetragen werden.

### Beispiel 9: Mobilisierung von Rutheniumverbindungen aus Titanelektroden mittels Chlorwasserstoff und Kohlenmonoxid

Auf Titanelektroden (Durchmesser: 15 mm, Dicke: 2-3 mm) wurde mittels eines Dipcoating-Prozesses (Sol-Gel-basiert mit anschließender Kalzinierung bei 500 °C) ein Mischoxid aus 30 Gew.-% Ruthenium und 70 Gew.-% Titanoxid aufgebracht, so dass die spezifische Rutheniumbeladung 33 g/m² betrug. 5 dieser derart beschichteten Titanelektroden wurden in einem Quarzreaktionsrohr (Durchmesser ~25 mm) vorgelegt. Der Ansatz (9a) wurde auf 330 °C aufgeheizt und für 2h mit einem Gasgemisch 1 (10 L/h) zusammengesetzt aus 4 L/h Sauerstoff und 6 L/h Stickstoff durchströmt (Oxidierphase). Danach wurde der Ansatz zuerst für 15 min mit einem Gasgemisch 2 zusammengesetzt aus 5 L/h Chlorwasserstoff und 5 L/h Stickstoff (Halogenierphase) und anschließend zur Bildung von flüchtigen Rutheniumverbindungen für 3h mit einem Gasgemisch 3 zusammengesetzt aus 3 L/h Chlorwasserstoff, 3 L/h Kohlenmonoxid und 4 L/h Stickstoff (Mobilisierphase) durchströmt.

Im Anschluss an die Mobilisierphase wurden als erster Indikator für die Mobilisierung von Rutheniumverbindungen die Bildung eines charakteristischen Niederschlags in einer kälteren Zone hinter dem Reaktor bewertet (Tab. 9a).

**Tab. 9a: Entfärbung der Formkörper; charakteristische Niederschlag in einer kälteren Zone (keine: --, geringe: -, mäßige: o, starke: +, sehr starke: ++)**

| **Beispiel:** | **9a** |
|---|---|
| Entfärbung | n.m. |
| Niederschlag | ++ |

| | |
|---|---|
| * unbehandelte Probe , n.m. = nicht messbar | |

Im Anschluss an diese Behandlung wurden die Titanelektroden ausgebaut und der Rutheniumgehalt mittels Röntgenfluoreszenzanalyse (RFA) bestimmt. Der Niederschlag in den kälteren Zonen hinter den Reaktoren wurde mit Salzsäure (20 Gew.-% Chlorwasserstoff) ausgewaschen. Die Zusammensetzung dieser Waschlösung wurde mittels Emissionsspektroskopie (OES) bestimmt (Tab. 9).

**Tab. 9: Zusammensetzung der Titanelektroden vor und nach der Mobilisierung von Rutheniumverbindungen und Zusammensetzung des Niederschlags in einer kälteren Zone**

| | **Beispiel:** | **1c*** | **9a** |
|---|---|---|---|
| **Substrat** | **Metallkomponente** | | |
| Titanelektrode | Ruthenium [g/m²] | 33 | 15 |
| | Titan [Gew.-%] | n.m. | n.m. |
| Niederschlag | Ruthenium [mg/L] | - | 8,9 |
| | Titan [mg/L] | - | 8,4 |

| | | | |
|---|---|---|---|
| n.m. = nicht messbar | | | |

Offenbar können auch aus der Oberfläche der Titanelektroden Rutheniumverbindungen ausgetragen werden.

## Patentansprüche

1. Verfahren zur Gewinnung von metallischem Ruthenium oder Rutheniumverbindungen aus Ruthenium oder Rutheniumverbindungen enthaltenden Feststoffen, insbesondere Feststoffkatalysator oder Elektrodenmaterial durch Behandlung des Feststoffs mit einem Gasstrom, der mindestens Halogenwasserstoff und Kohlenmonoxid enthält, bevorzugt Chlorwasserstoff und Kohlenmonoxid, in einer Reaktionszone bei erhöhter Temperatur, bevorzugt mindestens bei 250 °C, unter Bildung von flüchtigen Rutheniumverbindungen, die mit dem Gasstrom ausgetragen werden und anschließender Abkühlung des beladenen Gasstroms, bevorzugt durch Abscheidung von Rutheniumverbindungen in einer Abscheidungszone, die kälter ist als die Reaktionszone, insbesondere an kälteren Abscheidungsflächen, und/oder Absorption in Lösungen und/oder Adsorption an Trägermaterialien.

2. Verfahren nach Anspruch 1, **dadurch gekennzeichnet, dass** der Halogenwasserstoffgehalt des Halogenwasserstoff/CO-Gemisches des in die Reaktionszone eingehenden Gasstroms 0,1 bis 99,9 Vol.-%, bevorzugt 1 bis 99 Vol.-%, besonders bevorzugt 10 bis 90 Vol.-% und ganz besonders bevorzugt 30 bis 70 Vol.-% beträgt.

3. Verfahren nach Anspruch 1 oder 2, **dadurch gekennzeichnet, dass** der Kohlenmonoxidgehalt des Halogenwasserstoff/CO-Gemisches des in die Reaktionszone eingehenden Gasstroms 0,1 bis 99,9 Vol.-%, bevorzugt 1 bis 99 Vol.-%, besonders bevorzugt 10 bis 90 Vol.-% und ganz besonders bevorzugt 30 bis 70 Vol.-% beträgt.

4. Verfahren nach einem der Ansprüche 1 bis 3, **dadurch gekennzeichnet, dass** die Summe beider Komponenten Halogenwasserstoff und Kohlenmonoxid des in die Reaktionszone eingehenden Gasstroms mindestens 0,2 Vol.-%, bevorzugt mindestens 2 Vol.-%, besonders bevorzugt mindestens 20 Vol.-% und ganz besonders bevorzugt mindestens 60 Vol.-% beträgt.

5. Verfahren nach einem der Ansprüche 1 bis 4, **dadurch gekennzeichnet, dass** der in die Reaktionszone eingehende Gasstrom weniger als 10 Vol.-% Sauerstoff, besonders bevorzugt weniger als 1 Vol.-% enthält und ganz besonders bevorzugt sauerstofffrei ist.

6. Verfahren nach einem der Ansprüche 1 bis 5, **dadurch gekennzeichnet, dass** die Leerrohrgeschwindigkeit des in die Reaktionszone eingehenden Gasstroms weniger als 10 cm/s, besonders bevorzugt weniger als 2 cm/s beträgt.

7. Verfahren nach einem der Ansprüche 1 bis 6, **dadurch gekennzeichnet, dass** die Temperatur in der Reaktionszone mindestens 250°C, bevorzugt 250°C bis 400°C, besonders bevorzugt 250°C bis 380°C, ganz besonders bevorzugt 300°C bis 350°C beträgt.

8. Verfahren nach einem der Ansprüche 1 bis 7, **dadurch gekennzeichnet, dass** der mit flüchtigen Rutheniumverbindungen beladene Gasstrom zur Gewinnung fester Rutheniumverbindungen auf eine Temperatur kleiner als 250 °C, bevorzugt höchstens 100 °C abgekühlt wird.

9. Verfahren nach einem der Ansprüche 1 bis 8, **dadurch gekennzeichnet, dass** der Rutheniumverbindungen und/oder Rutheniummetall enthaltende Feststoff vor der Behandlung mit dem Halogenwasserstoff-Kohlenmonoxidgemisch in einer Oxidierphase mit einem Sauerstoff enthaltenden Gasstrom behandelt wird, wobei der Sauerstoffgehalt im Gasstrom insbesondere mindestens 0,1 Vol.-%, bevorzugt 10 bis 50 Vol.-% beträgt und die Oxidation bei einer Temperatur von bis zu 700°C durchgeführt wird.

10. Verfahren nach einem der Ansprüche 1 bis 9, **dadurch gekennzeichnet, dass** der Rutheniumverbindungen und/oder Rutheniummetall enthaltende Feststoff vor der Behandlung mit dem Halogenwasserstoff-Kohlenmonoxidgemisch in einer Halogenierphase mit einem Halogenwasserstoff, bevorzugt Chlorwasserstoff, enthaltenden Gasstrom behandelt wird, wobei der Halogenwasserstoffgehalt im Gasstrom mindestens 0,1 Vol.-%, bevorzugt mindestens 1 Vol.%, ganz besonders bevorzugt mindestens 10 Vol.-% beträgt und die Halogenierung bei einer Temperatur von bis zu 700°C durchgeführt wird..

11. Verfahren nach Anspruch 10, **dadurch gekennzeichnet, dass** die Oxidation nach Anspruch 9 vor der Halogenierung durchgeführt wird

12. Verfahren nach einem der Ansprüche 9 bis 11, **dadurch gekennzeichnet, dass** die Oxidation, die Halogenierung und die Behandlung des Feststoffs mit dem Halogenwasserstoff-Kohlenmonoxidgemisch mehrfach, insbesondere mindestens 3 fach wiederholt werden.

13. Verfahren nach einem der Ansprüche 1 bis 12, **dadurch gekennzeichnet, dass** der Rutheniumverbindungen enthaltende Feststoff ein Katalysator- oder Elektrodenmaterial ist.

14. Verwendung der aus einem Verfahren nach einem der Ansprüche 1 bis 13 erhaltenen Rutheniumverbindung oder Ruthenium zur Herstellung von Katalysatoren oder Elektrodenbeschichtungen.
